# EUROPEAN PATENT APPLICATION

(11) **EP 4 811 793 A1**
(43) Date of publication of application: **23.09.2026**
(21) Application number: 25305356.5
(22) Date of filing: 17.03.2025
(51) Int. Cl.: H04N 19/82, H04N 19/593, H04N 19/117, H04N 19/176

(54) **SPATIALLY DISPLACED INPUT TO ADAPTIVE LOOP FILTERING**

(71) Applicant: InterDigital CE Patent Holdings, SAS, 75017 Paris (FR)
(72) Inventor: NASER, Karam, 35250 MOUAZE (FR); BOISSON, Guillaume, 35137 PLEUMELEUC (FR); BORDES, Philippe, 35890 LAILLE (FR); GALPIN, Franck, 35235 THORIGNE-FOUILLARD (FR)
(74) Representative: Vossius & Partner Patentanwälte Rechtsanwälte mbB

(57) **Abstract**

A video coding device such as a video decoder or a video encoder may determine a block vector (BV) for a current pixel of a current video block and obtain, based on the BV, one or more reference samples for the current pixel. The coding device may reconstruct the current pixel of the current video block to obtain a reconstructed current pixel and apply an adaptive loop filter (ALF) to the reconstructed current pixel, wherein an input to the ALF may be determined based on the one or more reference samples obtained using the BV.

## Description

### BACKGROUND

The present application is related to video coding systems that may be used to compress digital video signals, e.g., to reduce the storage and/or transmission bandwidth needed for such signals. Video coding systems may include, for example, block-based, wavelet-based, and/or object-based systems.

### BRIEF SUMMARY

Systems, methods, and instrumentalities are disclosed for providing an input to an adaptive loop filter (ALF). A video decoding device as described herein may determine a first block vector (BV) for a current pixel of a current video block and obtain, based on the first BV, one or more first reference samples for the current pixel. The video decoding device may reconstruct the current pixel of the current video block to obtain a reconstructed current pixel, and apply an ALF to the reconstructed current pixel, wherein a first input to the ALF may be determined based on the one or more first reference samples obtained using the first BV.

In examples, the application of the ALF may further utilize a second input produced by a deblocking filter, a sample-adaptive offset filter, or a bilateral filter. In examples, the video decoding device may further determine a second BV for the current pixel and obtain one or more second reference samples for the current pixel based on the second BV, wherein the first input to the ALF may be determined further based on the one or more second reference samples (e.g., based on an average of the one or more first reference samples and the one or more second reference samples).

In examples, the current video block may be coded in a mode that utilizes the first BV (e.g., in an intra block copy (IBC) mode or an intra template matching (IntraTMP) mode). In examples, the current video block may not be coded in a mode that utilizes the first BV, in which case the first BV may be determined based on a neighboring block of the current video block (e.g., the neighboring block may be coded in the IBC mode or the IntraTMP mode).

In examples, the ALF based on the first input may be applied to the current pixel before a deblocking filter is applied to the current pixel. In examples, the ALF based on the first input may be applied to the current pixel after a sample-adaptive offset (SAO) filter or a bilateral filter (BIF) is applied to the current pixel.

The techniques disclosed herein may also be applied by a video encoding device. For example, the video encoding device may determine a BV for a current pixel of a current video block and obtain, based on the BV, one or more reference samples for the current pixel. The video encoding device may reconstruct the current pixel of the current video block to obtain a reconstructed current pixel, and apply an ALF to the reconstructed current pixel, wherein an input to the ALF may be determined based on the one or more reference samples obtained using the BV.

### BRIEF DESCRIPTION OF THE DRAWINGS

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings.
FIG. 1 shows an example system according to one or more embodiments of the present disclosure.
FIG. 2 shows an example video encoder according to one or more embodiments of the present disclosure.
FIG. 3 shows an example video decoder according to one or more embodiments of the present disclosure.
FIG. 4 shows examples of in-loop filters according to one or more embodiments of the present disclosure.
FIG. 5 shows examples of workflows associated with in-loop filtering (e.g., including an ALF and/or a cross-component adaptive loop filter (CCALF)) according to one or more embodiments of the present disclosure.
FIG. 6 shows examples of in-loop filtering according to one or more embodiments of the present disclosure.
FIG. 7 shows examples of in-loop filtering according to one or more embodiments of the present disclosure.
FIG. 8 shows an example of a bilateral filter (BIF) shape according to one or more embodiments of the present disclosure.
FIG. 9 shows examples of a temporal adaptive loop filter (TALF) according to one or more embodiments of the present disclosure.
FIG. 10 shows examples of using a motion vector (MV) to find reconstructed reference samples according to one or more embodiments of the present disclosure.
FIG. 11 shows examples of employing one or more fixed filters in an ALF process according to one or more embodiments of the present disclosure.
FIG. 12 shows an example of obtaining a reference video block for a current video block based on a block vector (BV) according to one or more embodiments of the present disclosure.
FIG. 13 shows an example of providing a spatially displaced (e.g., a BV-based) input to an ALF according to one or more embodiments of the present disclosure.

### DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

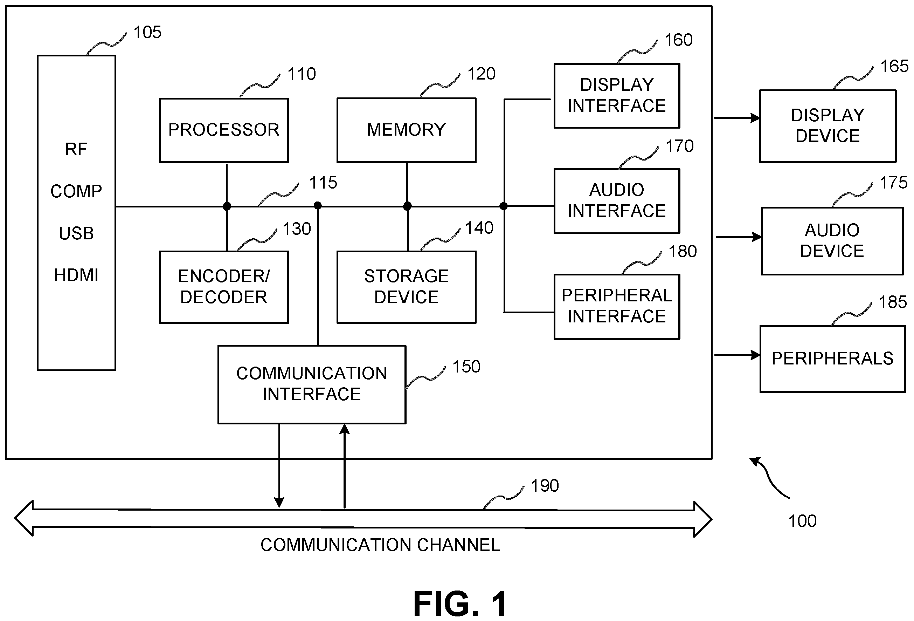

Referring to the drawings, there is shown in FIG. 1 a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., l2C bus), wiring, and printed circuit boards.

The system 100 may include at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 may include at least one memory 120, for example, a volatile memory device and/or a non-volatile memory device. The system 100 may include a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 may include an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 may be used to store instructions and/or provide working memory for video encoding and decoding functions. In some embodiments, memory external to the processor 110 and/or the encoder/decoder module 130 (e.g., the memory 120 and/or the storage device 140) may be used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 may include a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

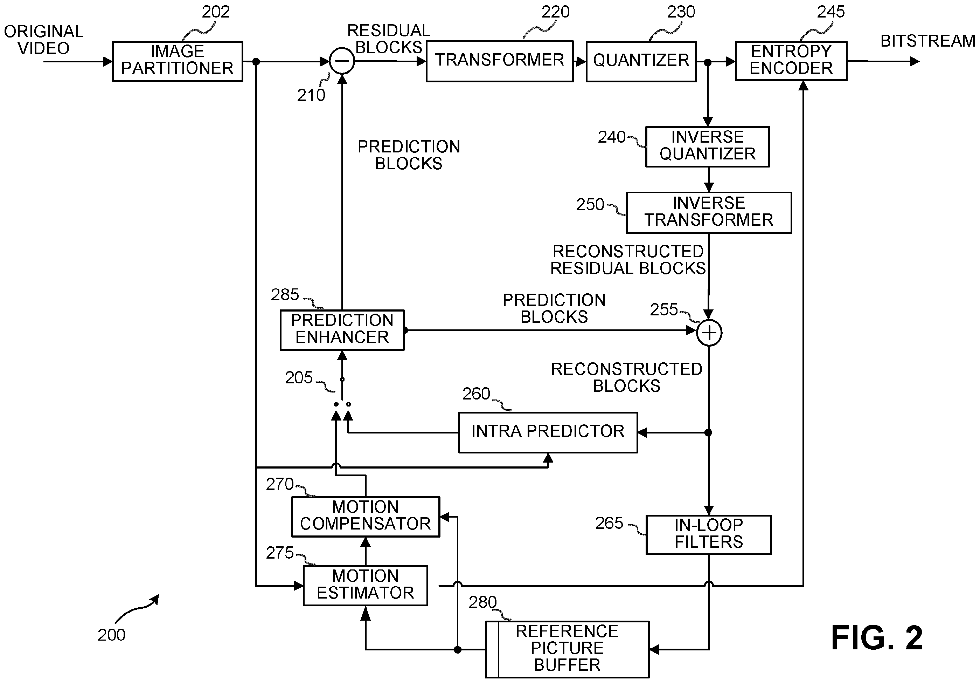

FIG. 2 is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

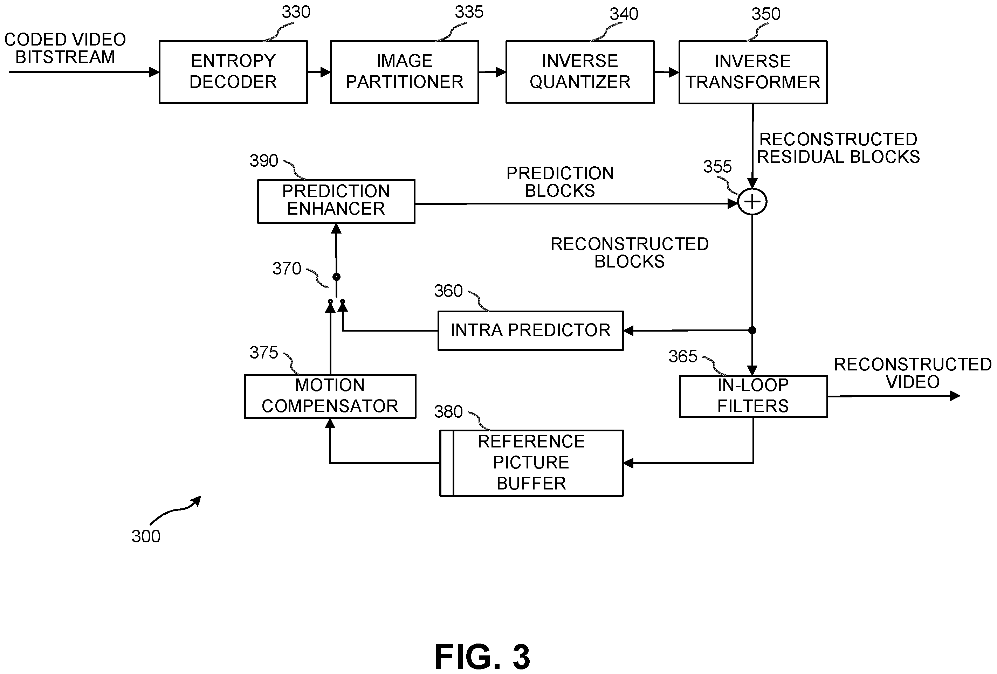

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, *Y,* and chroma components, *U* and *V* (also denoted herein by C, *Cb, Cr*).

Referring generally to FIG. 2 and the video encoder 200, video data (e.g., one or more video frames) is encoded generally as described below. Prior to encoding, video data may be pre-processed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU may include a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (e.g., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (e.g., reconstruct) respective residual blocks. Depending on the selected prediction mode, a predicted block can be obtained at 370 from an intra predictor 360 (e.g., intra prediction) or from a motion compensator 375 (e.g., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Block-based intra or inter prediction and transform coding, together with residuals quantization, may induce a variety of artifacts (e.g., at medium and low bitrates). In order to reduce those artifacts, in-loop filters may be applied, including, for example, deblocking filtering (DBF), bilateral filtering (BIF), sample-adaptive offset (SAO) filtering, and adaptive loop filtering (ALF).

A deblocking filter (DBF) may be used to smooth discontinuities that may appear along block boundaries. A sample-adaptive offset (SAO) filter may be used to attenuate artifacts occurring around edges and correct the local average intensity changes (e.g., banding artifact) with offsets signaled in a bitstream. A bilateral filter (BIF) may be used to denoise further reconstructed pictures from artifacts induced by the quantization of residuals in a transform domain. An adaptive loop filter (ALF) may be determined at an encoder side (e.g., as an optimal filter and/or according to a rate-distortion criterion). The coefficients of the ALF filter may be transmitted along with (e.g., in) a video bitstream, and may be retrieved and used at a decoder side.

One or more of DBF, SAO, and/or ALF may be used as in-loop filters. A DBF may aim at reducing blocking discontinuities. An SAO filter may aim at reducing artifacts (e.g., those resulting from the quantization of transform coefficients). An ALF and/or a cross-component adaptive loop filter (CCALF) may be adaptive filters aimed at enhancing a reconstructed signal (e.g., using Wiener-filter encoding approaches).

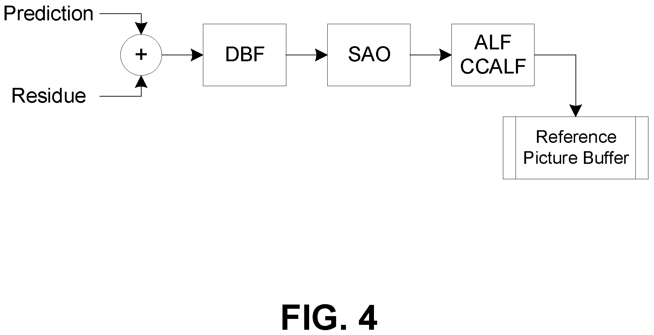

FIG. 4 illustrates an example workflow involving in-loop filters. In examples, if local deblocking conditions are met, luma and chroma reconstructed samples located along block boundaries may be filtered (e.g., first) with a deblocking filter. Offsets may be added locally (e.g., via an SAO filter) depending on classifications that may be performed using a band-classifier or an edge-classifier, for example. An adaptive-loop filter (e.g., including a cross-component adaptive loop filter) may be applied before the resulting sample values are stored in a reference picture buffer.

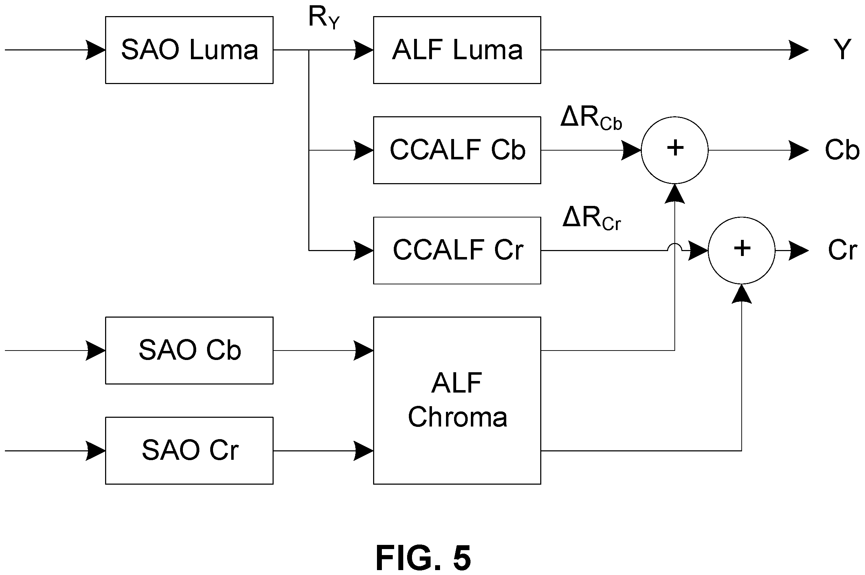

FIG. 5 illustrates an example workflow involving an ALF or a CCALF. As shown in FIG. 5, the CCALF may use luma samples to refine chroma sample values concurrently with ALF luma filtering and ALF chroma filtering.

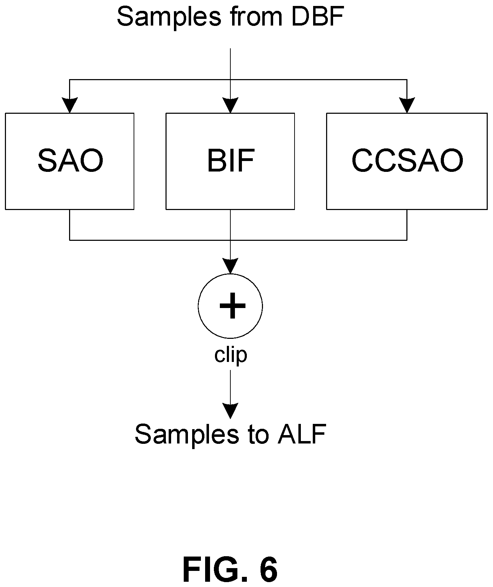

In examples, a BIF and/or a cross-component sample adaptive offset (CCSAO) filter may be used in the loop-filter stage (e.g., together with SAO) and may use samples generated by a deblocking filter as an input, as illustrated by FIG. 6.

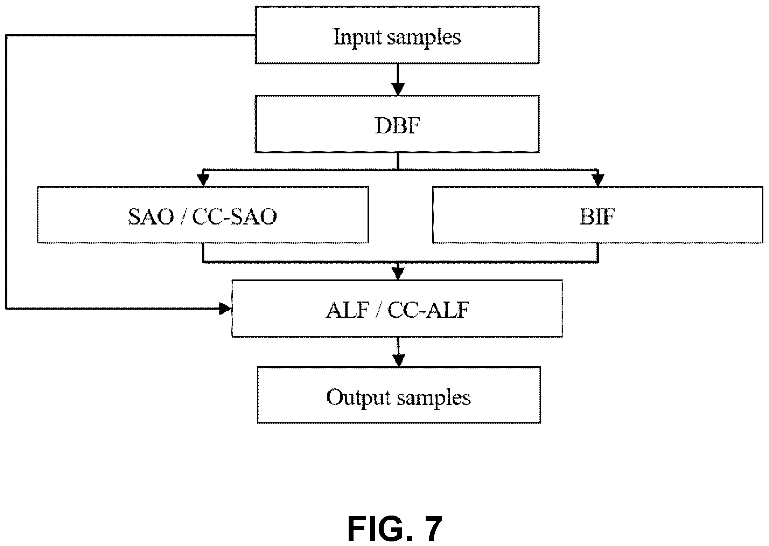

FIG. 7 illustrates an example in-loop filtering flow. In the example, filtering may be carried out in an SAO loop-filter stage. A BIF, an SAO and/or a CC-SAO may use samples from deblocking as input. Each filter may create an offset per sample, which may be added to an input sample and then clipped, before proceeding to ALF. An output sample *S_{OUT}* may be obtained as follows: ${S}_{OUT} = clip \left({S}_{IN}+{δ}_{SAO}+{δ}_{CCSAO}+{δ}_{BIF}\right)$ wherein *S_{IN}* may be the input sample from deblocking, *δ_{BIF}* may be the offset from bilateral filtering, *δ_{SAO}* may be the offset from the SAO, and *δ_{CCSAO}* may be the offset from the CC-SAO.

Such an implementation may allow an encoder to enable or disable filtering at a CTU and/or slice level, which the encoder may decide by evaluating an RDO cost.

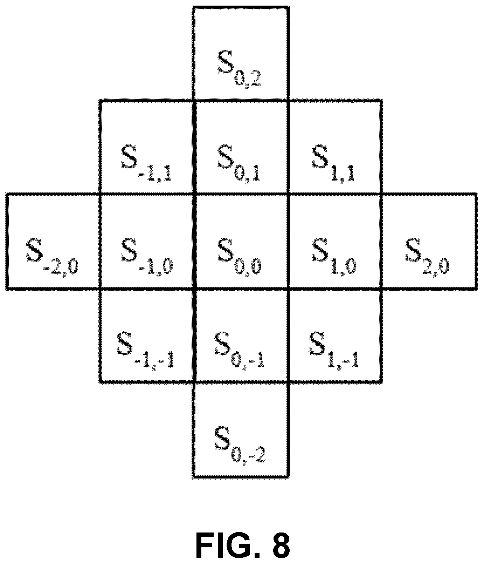

For CTUs that are filtered, the filtering process may proceed as follows. At a picture border, where samples may be unavailable, a bilateral filter may use an extension (e.g., a sample repetition) to fill in unavailable samples. For virtual boundaries, the behavior may be the same as for the SAO (e.g., filtering may or may not be performed). When crossing a horizontal CTU border, the bilateral filter may access the same samples that the SAO may be accessing. As an example, if the center sample ***S*_{0,0}** (e.g., as shown in FIG. 8) is located on the top line of a CTU, samples *S*_{-1,1}, *S*_{0,1} and *S*_{1,1} may be read from the CTU above, just like the SAO may do. Sample *S*_{0,2} may be padded, so an extra line buffer may not be needed.

The filter shape and the samples surrounding the center sample ***S*_{0,0}** may be denoted as shown in FIG. 8. Note that the diamond shape may be different from filters that have a square filter shape.

A BIF offset may be equal to a sum of 12 offsets, as shown by the equation below. ${δ}_{BIF} = \left({C}_{TU}⋅\left[\sum sign \left({S}_{i , j}-{S}_{0 , 0}\right) ⋅ {F}_{BIF , i , j , QP} \left(\left|{S}_{i , j}-{S}_{0 , 0}\right|\right)\right]+128\right) ≫ 8$ wherein *F*_{BIF,*i,j*,QP} may be based on a 26x16 LUT of 8-bit integers denoted by LUT_{base,QP} (for 26 QPs from 17 to 42 and 16 levels of sample differences). Three scale factors (*C*_{1,0}, *C*_{1,1} and *C*_{2,0}) may be used to pre-compute three LUTs for three different neighbor distances (1, $\sqrt{2}$, and 2), e.g., as shown by the equation below: ${LUT}_{i , j , QP} \left(k\right) = \left({C}_{i , j}⋅{LUT}_{base , QP}\left(k\right)+4\right) ≫ 3$

An averaging linear interpolation may be used to double the number of level for |*S_{i,j}* - *S*_{0,0} | from 16 to 32, e.g., as shown by the equation below: ${F}_{BIF , i , j , QP}^{luma} \left(d\right) = \left({LUT}_{i , j , QP}\left(min\left\{\left(d+2\right)≫3,15\right\}\right)+{LUT}_{i , j , QP}\left(min\left\{\begin{matrix}\left(d+6\right) ≫ \\ 3 , 15\end{matrix}\right\}\right)+1\right) ≫ 1$

For chroma, the number of cut off bits may be decreased from 3 to 2, e.g., as shown in the equation below: ${F}_{BIF , i , j , QP}^{chroma} \left(d\right) = \left({LUT}_{i , j , QP}\left(min\left\{\left(d+1\right)≫2,15\right\}\right)+{LUT}_{i , j , QP}\left(min\left\{\begin{matrix}\left(d+3\right) ≫ \\ 2 , 15\end{matrix}\right\}\right)+1\right) ≫ 1$

A TU-based scale factor *C*_{TU} described herein may be defined as follows: ${C}_{TU} = {C}_{w , h}^{TU} + {C}_{MAD}^{TU}$ wherein ${C}_{w , h}^{TU}$ may be based on the TU's shape sizes and ${C}_{MAD}^{TU}$ may be based on the mean absolute difference (MAD) of the TU. ${C}_{w , h}^{TU}$ and/or ${C}_{MAD}^{TU}$ may be calculated using an LUT. For example, let LUT*_{w,h}* be a 2D 8 × 8 lookup table with non-negative 8-bit integer values, and let LUT_{MAD} be a 1D 16-entry lookup table with non-negative 8-bit integer values. The scale factors may be defined as follows: ${C}_{w , h}^{TU} = {LUT}_{w , h} \left({log}_{2} {width}_{TU}, {log}_{2} {height}_{TU}\right)$ ${C}_{MAD}^{TU} = {LUT}_{MAD} \left(min\left({MAD}_{TU}≫4,15\right)\right)$

The MAD of a (*h* × *w*)-size TU with the channel samples denoted by *s_{i,j}* may be defined as follows: $MAD = \frac{1}{hw} {\sum }_{i = 1}^{h} {\sum }_{j = 1}^{w} \left|{s}_{i , j}-\frac{1}{hw}{\sum }_{i = 1}^{h} {\sum }_{j = 1}^{w} {s}_{i , j}\right|$

In examples, a total of four 64-byte tables LUT*_{w,h}* and four 16-byte tables LUT_{MAD} may be introduced (e.g., for luma/chroma component and/or for intra/inter prediction).

In examples, *C*_{TU} may be a constant for all samples of the same channel inside one TU.

In examples, the maximum value of *C*_{TU} may be 20 (e.g., for chroma component and intra prediction) and the maximum value of ΣF_{BIF,*i*,*j*,QP}(|*S*_{*i*,*j*} - *S*_{0*,*0}|) may be 820. The value obtained in a modified version of Eq. 2 before right bit-shifting may belong to the interval [-13812, 14068] in the worst case. Therefore, multiple (e.g., all) arithmetic operations may be successfully accomplished in 15-bit signed integers. The multiplication in Eq. 2 may be implemented as a multiplication of a 5-bit unsigned integer and a 11-bit signed integer with the result saved into a 15-bit signed integer.

A parameter (e.g., bilateral_filter_strength) may be signalled (e.g., in the PPS), the value of which may be set to 0 or 1. For full strength filtering (e.g., bilateral_filter_strength = 1), Eq. 2 may be used. For the half-strength filtering (e.g., bilateral_filter_strength = 0), Eq. 2 may be modified to decrease the value by approximately two times, e.g., as shown in the equation below: ${δ}_{BIF} = \left({C}_{TU}⋅\left[\sum sign \left({S}_{i , j}-{S}_{0 , 0}\right) ⋅ {F}_{BIF , i , j , QP} \left(\left|{S}_{i , j}-{S}_{0 , 0}\right|\right)\right]+256\right) ≫ 9$

A CCSAO may be used to refine reconstructed samples. Similarly to an SAO, the CCSAO may classify the reconstructed samples into different categories, derive one offset for each category, and add the offset to the reconstructed samples in that category. While the SAO may use a single component of a current sample as input, the CCSAO may utilize all three components to classify the current sample into different colour bands.

SAO, BIF and/or CCSAO offsets may be computed in parallel, added to reconstructed samples, and jointly clipped, before proceeding to ALF (e.g., as shown in FIG. 6).

Residual samples may be used as inputs (e.g., additional inputs) to an ALF. A filtered sample may be derived as follows: ${R}^{˜} \left(x, y\right) = R \left(x, y\right) + \left[{\sum }_{i = 0}^{19} {c}_{i}\left({f}_{i , 0}+{f}_{i , 1}\right)\right] + \left[{\sum }_{i = 20}^{25} {c}_{i} \left({g}_{i , 0}+{g}_{i , 1}\right)\right] + \left[{\sum }_{i = 26}^{27} {c}_{i}\left(\begin{matrix}{h}_{i , 0} + \\ {h}_{i , 1}\end{matrix}\right)\right] + \left[{\sum }_{i = 28}^{29} {c}_{i} {g}_{i}\right] + \left[{\sum }_{i = 30}^{30} {c}_{i} {h}_{i}\right] + \left[{\sum }_{i = 31}^{31} {c}_{i} {r}_{i}\right] + \left[{\sum }_{i = 32}^{32} {c}_{i} {rFilterd}_{i}\right]$ wherein *r*ᵢ may be a clipped neighboring residual sample value and *rFilteredᵢ* may be a clipped residual sample filtered by a fixed filter. For residual samples, the fixed filter may reuse an offline fixed filter trained for reconstruction after an SAO.

A temporal adaptive loop filter (TALF) may use reconstructed pixels in a reference picture to improve a current picture's quality. Similar to an ALF, the filter coefficients and related information may be transmitted (e.g., in TALF_APS).

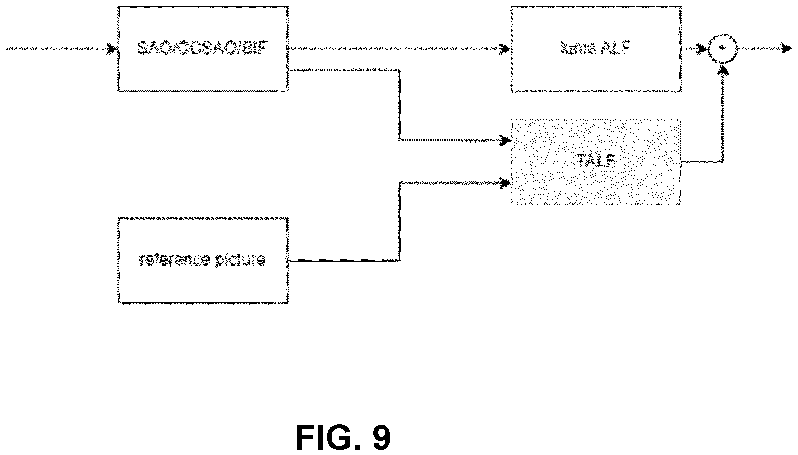

A TALF may generate offsets to a luma ALF's output (e.g., as shown in FIG. 9). The usage of a TALF for a CTB may be indicated (e.g., signaled by a CTB-level flag).

A TALF may have multiple (e.g., six) filtering modes.

A first filtering mode may be an uni-filtering mode that uses a rounded MV0 in reference picture list 0 to locate filter inputs. The positions without existing MV0 may be skipped in the first mode when a current CTB uses the TALF.

A second filtering mode may be an uni-filtering mode that uses a rounded MV1 in reference picture list 1 to locate filter inputs. The positions without existing MV1 may be skipped in the second mode when a current CTB uses the TALF.

A third filtering mode may be a bi-filtering mode that uses the rounded MV0 and MV1 in reference picture list 0 and 1, respectively, to locate filter inputs. The reconstructed pixels from the reference positions in the reference picture list 0 and 1 may be averaged before feeding into the TALF. The positions without existing MV0 and MV1 may be skipped in the third mode when the current CTB uses the TALF.

A fourth filtering mode may be an uni-filtering mode that uses collocated reconstructed samples in the closest reference picture as filter inputs.

A fifth filtering mode may be an uni-filtering mode that uses collocated reconstructed samples in the second closest reference picture as filter inputs.

A sixth filtering mode may be a bi-filtering mode that uses collocated reconstructed samples in the first and the second closest reference pictures as filter inputs. Similar to the third mode, the reconstructed pixels from the two reference pictures may be averaged before feeding into the filter.

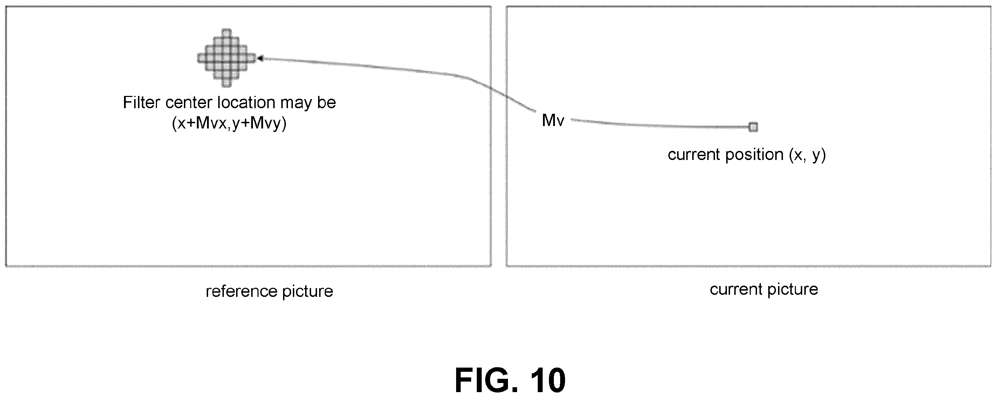

FIG. 10 shows an example of using an Mv to find reconstructed samples in a reference picture.

Loop filtering may improve reconstruction quality by applying a series of filters (e.g., different filters), each of which may target different reconstruction improvements. For example, a deblocking filter may aim at removing deblocking artefacts, an SAO may aim at retaining missing edge and/or band information, a BIF may be used as a general denoising filter, and an ALF may use a least square estimator for reducing the noise between filtered and original images.

An ALF may be improved (e.g., continuously) by increasing the input (e.g., providing additional input) to the ALF. For example, in addition to providing input to the ALF from a DBF, from residual signals (e.g., luma residuals), or based on a Laplacian function, more input may be provided to the ALF to better estimate an original image and improve reconstruction quality.

In examples, the input to the ALF may be extended to include spatially displaced reconstructed pixels, such as, for instance, pixels of similar properties from a previously reconstructed area of a current picture, to improve a current pixel (e.g., with improved reconstruction quality and/or overall BD rate saving). The ALF input that includes the pixels (e.g., samples) from the reconstructed spatial neighbor of the current pixel may be referred to herein as a spatially displaced ALF input, which, as explained above, may allow for better estimate of a current picture and/or BD rate savings.

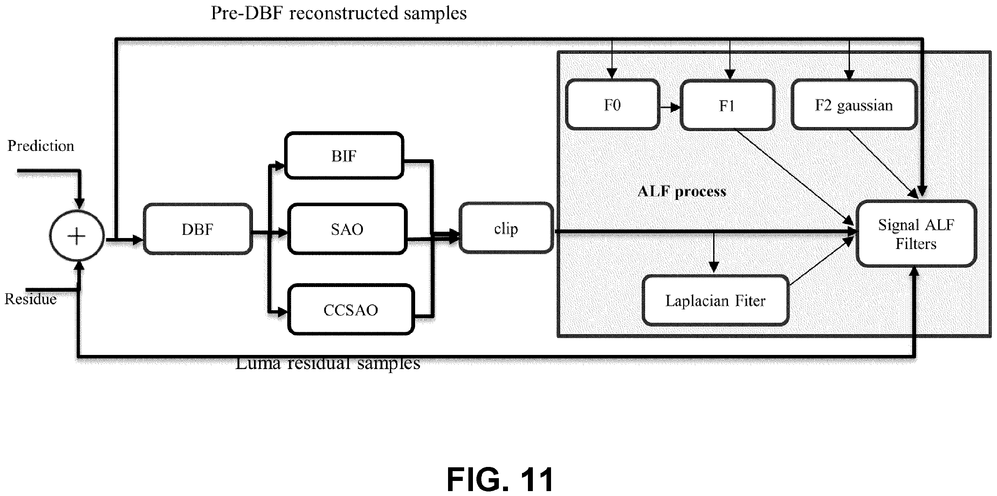

An example of the ALF process may utilize multiple inputs to compute a correction for improving the quality of a signal. The multiple inputs may include, for example, an output from a DBF, one or more luma residuals, an output from a BIF or an SAO, and/or the like. The ALF process may also employ one or more fixed filters (e.g., which may be trained offline) configured to process the inputs for the ALF, for example, as illustrated by FIG. 11 (e.g., the filters may include F0, F1, F2 gaussian, and/or a Laplacian filter).

The inputs to the ALF process may be expanded to include spatially displaced reconstructed pixels, which may improve the estimation of the ALF, reduce a mean squared error (MSE) between an original image and a filtered image, and/or improve overall BD rate savings.

The spatially displaced input may be determined based on a block vector (BV) associated with a current video block (e.g., a coding unit) of a picture. For examples, the block vector may be used to fetch samples or pixels spatially displaced from a current pixel of the current video block for the ALF calculations associated with the current pixel (e.g., as input to the ALF). The current video block may be coded with a BV-based mode, such as, for example, an Intra Block Copy (IBC) mode, an Intra template matching (IntraTMP) mode, A Template-based Intra Mode Derivation (TIMD) mode, a Decoder-side Intra Mode Derivation (DIMD) mode, a Spatial Geometric Partitioning Mode (SGPM), etc., and the block vector may point to a reference video block where similar pixels may be found and used for the ALF estimation of the current video block.

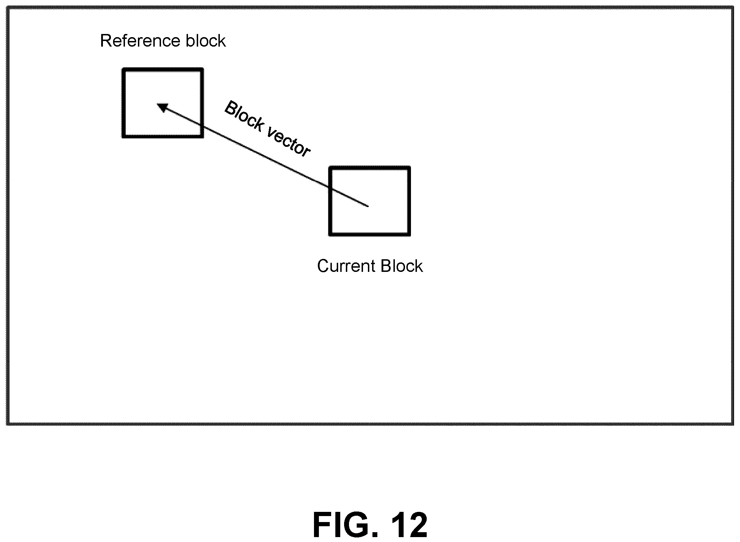

FIG. 12 shows an example of obtaining a reference video block for a current video block based on a block vector.

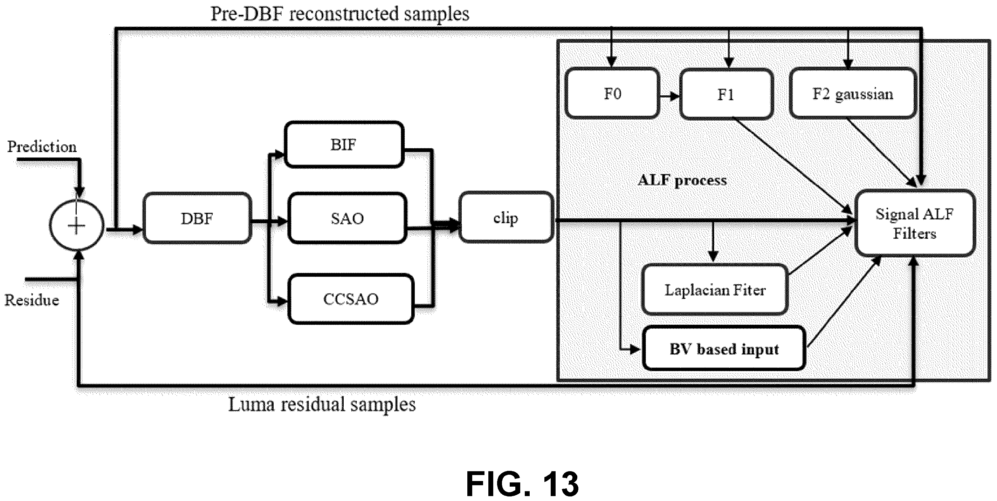

FIG. 13 shows an example of providing a spatially displaced input (e.g., "BV based input" shown in FIG. 12) to an ALF.

In examples, a current pixel of a current video block may have an associated block vector (e.g., the current video block may be coded in the IBC mode or the IntraTMP mode), and the block vector may be used to obtain/fetch one or more reference pixels to use as an input (e.g., an additional input) to an ALF. The reference samples may be taken from the samples before a DBF (e.g., the ALF based on the additional input may be applied to the current pixel before the DBF is applied to the current pixel). The reference samples may be taken after BIF/SAO (e.g., the ALF based on the additional input may be applied to the current pixel after the BIF/SAO is applied to the current pixel).

In examples, a current pixel of a current video block may not have an associated block vector (e.g., the current video block may not be coded in the IBC mode or the IntraTMP mode). In these examples, the additional input (e.g., BV-based input) to the ALF may be considered to be zero. In a variant, the additional input may be taken as the samples before DBF (e.g., assuming a BV of 0). In a variant, the additional input may use reconstructed samples after BIF/SAO.

ALF coefficients may be calculated for a current region under consideration. The coefficients may be selected to minimize the distortion between original and filtered pixels. The coefficients may be signaled to a decoder, and the decoder may decode the coefficients before using them with the additional input (e.g., based on spatially displaced pixels) described herein.

Using the techniques described herein, an ALF may use pixels from the current (e.g., reconstructed) picture that may still be available as an input rather than obtaining pixels from one or two reference pictures. Consequently, memory bandwidth requirements associated with the filtering operation may be reduced.

In examples, a current pixel of a current video block may have multiple associated block vectors (e.g., if the current video block is coded in a bi-prediction IBC mode or a fusion IntraTMP mode). In these examples, reference samples respectively obtained using the multiple BVs may be used to determine an input to the ALF. For example, the reference samples obtained using the multiple block vectors may be averaged and used as an input to the ALF. In these examples, the BV-based input to the ALF may be considered to be zero for pixels that do not have associated block vectors.

In examples, if a current pixel of a current video block does not have an associated block vector (e.g., the current video block is not coded in the IBC mode or the IntraTMP mode), block vector(s) associated with a neighboring block of the current video block may be used to determine an ALF input for the current pixel. For example, a merge list of candidate blocks may be built for the current video block from neighboring blocks. If any of the merge candidate blocks has a BV, that BV may be used to fetch samples for ALF. For example, pixel samples referenced by the block vectors associated with the merge candidate blocks may be obtained for the current pixel and used to determine an additional input for ALF (e.g., based on an average of the reference samples if multiple BVs are used to obtain the reference samples).

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:
i. Encoding, into coded video data, syntax elements that can enable the decoder to decode the coded video data, according to any of the embodiments described herein.
ii. Video data (e.g., a bitstream) that may include one or more of the described syntax elements, or variations thereof, whether transmitted, stored, or otherwise made available.
iii. Creating, transmitting, receiving, and/or decoding of the bitstream.
iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" is intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:
i. session description protocol (SDP), for example as described in RFCs and/or used in conjunction with real-time transport protocol (RTP) transmission.
ii. hypertext transfer protocol (HTTP) live Streaming (HLS) manifest transmitted over HTTP.
iii. dynamic adaptive streaming over HTTP (DASH) media presentation description (MPD) descriptors, for example as used in DASH and transmitted over HTTP.
iv. RTP header extensions, for example as used during RTP streaming.
v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) is transmitted to the decoder enabling the decoder to use the same particular parameter. In some embodiments, the signaling may be implicit, in that the information (e.g., a particular parameter) is indicated based on other information at or transmitted to the decoder or derived or selected by the decoder based on information available at the decoder. By not transmitting the information (e.g., the particular parameter), bit savings is thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It is understood, therefore, that the overall teachings of the present disclosure are not limited to the particular embodiments, implementations, and examples disclosed herein, but are intended to cover variations, modifications, and alternatives as defined by the appended claims and any and all equivalents thereof.

## Claims

1. A video decoding device, comprising
a processor configured to:
determine a first block vector (BV) for a current pixel of a current video block;
obtain, based on the first BV, one or more first reference samples for the current pixel;
reconstruct the current pixel of the current video block to obtain a reconstructed current pixel; and
apply an adaptive loop filter (ALF) to the reconstructed current pixel, wherein a first input to the ALF is determined based on the one or more first reference samples obtained using the first BV.

2. The video decoding device of claim 1, wherein the application of the ALF further utilizes a second input produced by a deblocking filter, a sample-adaptive offset filter, or a bilateral filter.

3. The video decoding device of claim 1 or claim 2, wherein the processor is further configured to determine a second BV for the current pixel and obtain one or more second reference samples for the current pixel based on the second BV, and wherein the first input to the ALF is determined further based on the one or more second reference samples.

4. The video decoding device of claim 3, wherein the first input to the ALF is determined based on an average of the one or more first reference samples and the one or more second reference samples.

5. The video decoding device of any of claims 1-4, wherein the current video block is coded in a mode that utilizes the first BV.

6. The video decoding device of any of claims 1-5, wherein the current video block is not coded in a mode that utilizes the first BV, and wherein the first BV is determined based on a neighboring block of the current video block.

7. The video decoding device of any of claims 1-6, wherein the application of the ALF to the current pixel based on the first input takes place before a deblocking filter is applied to the current pixel.

8. The video decoding device any of claims 1-6, wherein the application of the ALF to the current pixel based on the first input takes place after a sample-adaptive offset filter or a bilateral filter is applied to the current pixel.

9. A video decoding method, comprising:
determining a first block vector (BV) for a current pixel of a current video block;
obtaining, based on the first BV, one or more first reference samples for the current pixel;
reconstructing the current pixel of the current video block to obtain a reconstructed current pixel; and
applying an adaptive loop filter (ALF) to the reconstructed current pixel, wherein a first input to the ALF is determined based on the one or more first reference samples obtained using the first BV.

10. The video decoding method of claim 9, further comprising determining a second BV for the current pixel and obtaining one or more second reference samples for the current pixel based on the second BV, wherein the first input to the ALF is determined further based on the one or more second reference samples.

11. The video decoding method of claim 10, wherein the first input to the ALF is determined based on an average of the one or more first reference samples and the one or more second reference samples.

12. The video decoding method of any of claims 9-11, wherein the current video block is coded in a mode that utilizes the first BV.

13. The video decoding method of any of claims 9-11, wherein the current pixel is not coded in a mode that utilizes the first BV, wherein the first BV is determined based on a neighboring block of the current video block.

14. The video decoding method of any of claims 9-13, wherein the application of the ALF to the current pixel based on the first input takes place before a deblocking filter is applied to the current pixel, or after a sample-adaptive offset filter or a bilateral filter is applied to the current pixel.

15. A video encoding device, comprising
a processor configured to:
determine a first block vector (BV) for a current pixel of a current video block;
obtain, based on the first BV, one or more first reference samples for the current pixel;
reconstruct the current pixel of the current video block to obtain a reconstructed current pixel; and
apply an adaptive loop filter (ALF) to the reconstructed current pixel, wherein a first input to the ALF is determined based on the one or more first reference samples obtained using the first BV.
